Europäisches Patentamt

European Patent Office

Office européen des brevets

(19)

(11) Numéro de publication : **0 074 888**
**B1**

(12) **FASCICULE DE BREVET EUROPÉEN**

(45) Date de publication du fascicule du brevet :
02.01.86

(51) Int. Cl.⁴ : **G 21 C 19/10, F 16 C 29/02**

(21) Numéro de dépôt : 82401625.7

(22) Date de dépôt : 02.09.82

(54) **Dispositif de manutention d'une charge et son application à la manutention d'une charge immergée.**

(30) Priorité : 10.09.81 FR 8117150

(43) Date de publication de la demande :
23.03.83 Bulletin 83/12

(45) Mention de la délivrance du brevet :
02.01.86 Bulletin 86/01

(84) Etats contractants désignés :
BE DE FR GB IT SE

(56) Documents cités :
DE-A- 2 124 797
DE-A- 2 536 990
DE-A- 2 845 580
DE-C-   873 334
FR-A- 2 135 833
FR-A- 2 395 569
US-A- 3 455 122
US-A- 3 754 799

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Faure, Michel
1, rue du Docteur Schweitzer
F-91430 Igny (FR)**
Inventeur : **Poinssot, Jean-Louis
37, rue Charles Péguy
F-91120 Palaiseau (FR)**

(74) Mandataire : **Mongrédien, André et al
c/o BREVATOME 25, rue de Ponthieu
F-75008 Paris (FR)**

Jouve, 18, rue St-Denis, 75001 Paris, France

EP 0 074 888 B1

## Description

La présente invention a pour objet un dispositif de manutention d'une charge, en particulier d'une charge immergée dans un liquide, à l'aide d'un arbre de section polygonale qui permette à la fois un positionnement angulaire précis de l'arbre et un déplacement de celui-ci le long de son axe sans vibration.

Les pays équipés de centrales nucléaires pour la production d'électricité cherchent à obtenir un coût du kWh le plus bas possible. Pour ce faire, les combustibles doivent être utilisés au maximum. Le contrôle non destructif de l'évolution de santé de leur gainage permet de décider de la poursuite de leur utilisation : il est donc intéressant de pouvoir faire ce contrôle sur le site. Les éléments combustibles irradiés sont stockés dans des piscines, l'eau assurant la protection biologique et l'échange thermique de la puissance résiduelle. L'inspection d'un crayon nécessite son défilement devant des capteurs tout en restant immergé. La recherche de défauts naissants fait appel à de grandes sensibilités de la part des appareils de détection. La connaissance de la position des défauts demande non seulement un défilement, mais aussi une rotation du crayon.

A l'heure actuelle, dans les dispositifs servant à la manutention d'éléments combustibles, le guidage des arbres est réalisé de plusieurs manières. On peut utiliser deux guides cylindriques parallèles le long desquels se déplace un mécanisme de liaison solidaire de l'arbre. D'autres systèmes utilisent un ou deux guides munis d'une rainure longitudinale dans laquelle se déplace une clavette fixée sur l'arbre. Les barres de guidage peuvent encore avoir la forme d'arbres cannelés permettant le coulissement d'une pièce reliée à l'arbre de manière rigide, cette pièce étant munie de cannelures coopérant avec celles de la barre de guidage. On peut encore envisager des guides à glissières de toutes formes le long desquels se déplacent des éléments solidaires de l'arbre, tous ces systèmes pouvant être équipés de roulements à billes ou de guides à billes. Cependant, ces divers dispositifs présentent l'inconvénient de ne pas permettre d'orienter l'arbre à volonté par rapport à un châssis fixe.

Le document US-A-3 455 122 décrit un dispositif d'entraînement comportant un arbre muni de cannelures saillantes qui pénètrent dans des logements correspondants prévus sur la face interne d'une pièce cylindrique solidaire de l'arbre à entraîner. Des orifices de sortie d'air prévus dans les cannelures créent un coussin d'air qui permet de diminuer les frottements lorsque les deux pièces se déplacent en translation l'une par rapport à l'autre. Cependant, ces coussins d'air ne jouent aucun rôle dans l'entraînement en rotation de la pièce menée : ce rôle est assuré par les cannelures, ce qui a pour conséquence les inconvénients mentionnés ci-dessus.

Le document DE-A-2 536 990 décrit un dispositif de manutention d'assemblages combustibles nucléaires à l'aide d'un grappin situé à l'extrémité inférieure d'une tige verticale. Cette tige est manœuvrée par un système d'engrenage relié à un système vis-écrou et elle est maintenue dans un palier qui permet le positionnement radial. Si l'on peut orienter la tige par rapport à un châssis fixe, ce mécanisme présente une certaine inertie et ne permet pas des mouvements rapides. De plus, il y a des risques de vibrations.

La présente invention a justement pour but d'éliminer cet inconvénient en proposant un dispositif dans lequel le crayon combustible est solidaire d'un ascenseur pouvant tourner autour de son axe vertical. Cet ascenseur doit être exempt de toutes vibrations, car celles-ci constituent un bruit de fond pour les capteurs ; de plus, il doit présenter une grande raideur et un jeu angulaire nul. Ceci n'est pas possible avec les dispositifs classiques mentionnés ci-dessus qui sont en outre délicats à utiliser en immersion, surtout en eau déminéralisée et sous rayonnement gamma.

En effet, les matériaux utilisables dans de telles conditions ont des caractéristiques voisines et les risques de grippage ne sont pas négligeables.

La présente invention résout ce problème grâce à un dispositif qui permet d'une part un déplacement longitudinal de l'arbre sans frottement et sans vibration grâce à un palier fluide de guidage et, d'autre part, d'orienter l'ensemble palier-arbre par rapport à un châssis fixe.

Le dispositif de manutention d'une charge à l'aide d'un arbre objet de l'invention comporte, de manière connue, des moyens de translation de l'arbre le long de son axe et des moyens de rotation de l'arbre autour de son axe. Selon l'invention, l'arbre a une section polygonale et est entouré d'un palier fluide assurant son guidage, les moyens de rotation sont en prise avec le palier fluide, l'arbre présente au moins deux faces planes parallèles et ledit palier comporte, en regard de chacune des deux faces planes précitées, deux chambres de répartition dans chacune desquelles débouche une arrivée de fluide sous pression, chacune des arrivées de fluide sous pression étant munie d'un réglage individuel de pression.

Dans son sens le plus général, le mot « cylindre » désigne un solide engendré par une droite se déplaçant parallèlement à elle-même, le long d'une ligne quelconque dont certaines parties peuvent être courbes et d'autres constituées par des segments de droite. Avec cette définition, un arbre de section polygonale peut donc être considéré comme un cas particulier d'un arbre cylindrique. C'est pourquoi on précise que l'invention peut s'appliquer à n'importe quel arbre « polygonal » ou « cylindrique » pourvu qu'il présente au moins une face plane : un arbre dont la section est un demi-cercle peut être considéré comme un arbre cylindrique comportant une face plane parallèle à ses génératrices.

Le fait d'avoir un réglage individuel de pression pour chaque arrivée de fluide permet de régler celle-ci dans chacune des deux chambres situées en regard d'une face de l'arbre et de la maintenir constante pendant toute la durée de fonctionnement de l'appareil. Par la suite, si l'arbre subit une déviation angulaire accidentelle, il comprime le matelas, fluide correspondant à l'une des deux chambres de répartition tandis que le matelas fluide correspondant à l'autre chambre voit sa pression diminuer : un couple est donc exercé sur les deux faces planes opposées de l'arbre et celui-ci est ramené automatiquement dans sa position initiale.

Suivant une autre caractéristique du dispositif objet de l'invention, le palier comporte, en regard d'au moins une face plane de l'arbre, un premier et un deuxième groupes de deux chambres de répartition dans chacune desquelles débouche une arrivée de fluide sous pression, chacune des arrivées de fluide sous pression étant munie d'un réglage individuel de pression, le premier groupe étant espacé du deuxième groupe le long de l'axe de l'arbre et les deux groupes étant liés mécaniquement l'un à l'autre.

Enfin, l'invention a également pour objet un dispositif de manutention d'une charge immergée dans un milieu liquide, ce dispositif étant conforme au dispositif objet de l'invention et en ce que ce liquide est utilisé comme fluide d'alimentation du palier de guidage.

Enfin, l'invention a également pour objet un dispositif de contrôle d'un objet comportant des moyens de contrôle et un dispositif de manutention pour amener ledit objet devant les moyens de contrôle, ce dispositif de manutention étant conforme à ce qui est décrit ci-dessus.

L'invention sera mieux comprise à la lecture de la description qui va suivre, donnée à titre d'exemple purement illustratif et nullement limitatif, en référence aux dessins annexés dans lesquels :

la figure 1 est une vue schématique en perspective de l'ensemble du dispositif objet de l'invention,

la figure 2 est une vue schématique en perspective et partiellement en coupe d'une extrémité du palier de guidage utilisé dans le dispositif de la figure 1, et

la figure 3 est une vue schématique en perspective, avec arrachement partiel, des plaques utilisées pour la réalisation du palier de la figure 2.

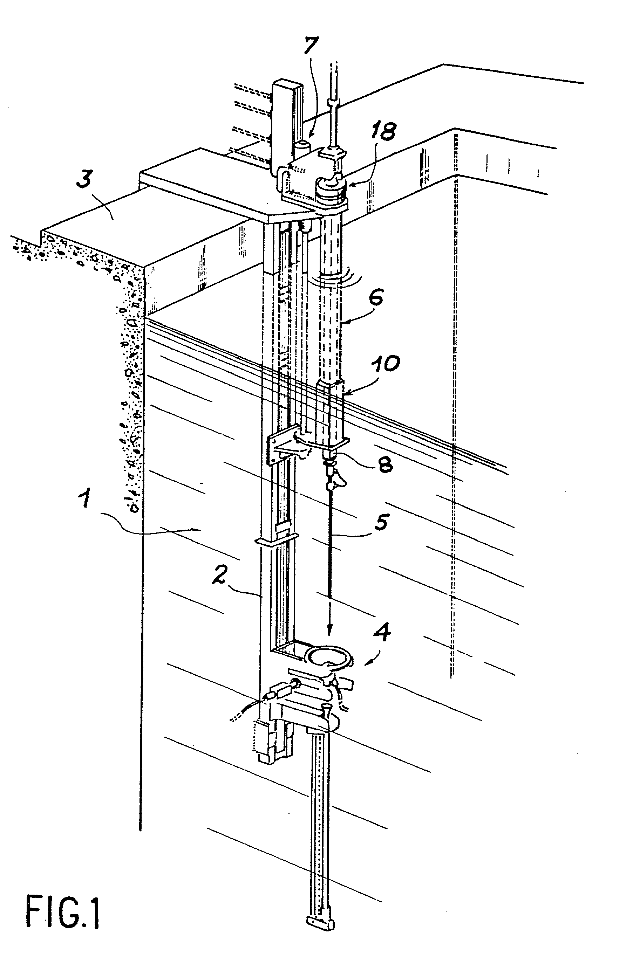

La figure 1 montre l'ensemble du dispositif conforme à l'invention, qui porte la référence générale 1. Celui-ci se compose essentiellement d'un support vertical 2 en grande partie immergé dans l'eau d'une piscine de stockage et fixé à la margelle 3 de cette dernière. A la partie inférieure du support 2 est fixé un dispositif de contrôle 4, par exemple un dispositif à courants de Foucault, devant lequel peut se déplacer un crayon combustible 5. Celui-ci est monté à l'extrémité inférieure d'un arbre 8 de section polygonale qui, dans le mode de réalisation préféré décrit ici, est de section carrée. L'arbre 8 se déplace longitudinalement à l'intérieur d'un tube de suspension 6 et il est maintenu par un palier fluide 10 de guidage relié au support 2. Les mouvements de translation de l'arbre 8 sont obtenus grâce à une chaîne (non représentée), placée à l'intérieur du tube 6 et reliée à un moteur de translation 7. Le palier 10 est solidaire du tube de suspension 6 qui est lui-même relié à des moyens de rotation, en l'occurrence un plateau tournant 18. Il est clair que les mouvements de ce dernier entraînent la rotation du palier 10 par l'intermédiaire du tube 6 et donc une rotation corespondante de l'arbre 8. On peut ainsi déterminer la position angulaire de l'élément combustible 5 avant de le faire passer devant le dispositif de contrôle 4 et effectuer ce contrôle suivant plusieurs génératrices successivement. Dans l'exemple décrit ici, où le crayon combustible 5 est immergé dans l'eau d'une piscine, les moteurs 7 et 18 sont placés hors de la masse liquide et on utilise l'eau de cette piscine comme fluide d'alimentation du palier 10. Grâce à la présence de ce dernier, les mouvements de translation de l'arbre 8 peuvent se faire pratiquement sans frottement et sans vibration et l'immobilisation en rotation de l'arbre par rapport au palier est assurée par la forme polygonale de ces deux éléments.

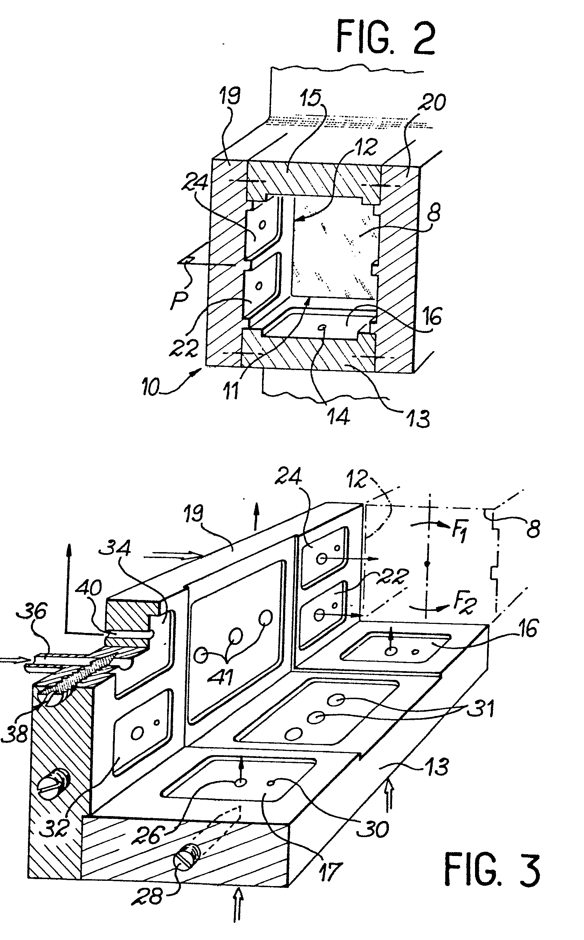

La figure 2 montre plus en détail une extrémité du palier 10. Sur cette figure, on voit que, dans le cas particulier décrit ici, l'arbre 8 est de section carrée, définissant donc quatre faces planes dont l'une, située à gauche de la figure, porte la référence 12. Le palier est constitué de quatre plaques telles que 13 comportant chacune, de manière classique, une arrivée de fluide sous pression 14 débouchant dans un espace 16 appelé « chambre de répartition ». Dans cet exemple, la plaque 13 et la plaque 15 qui lui fait face ne comportent, à leur extrémité visible sur la figure, qu'une seule chambre de répartition 16 en regard de la face correspondante de l'arbre 8. La chambre de répartition 16 occupe presque toute la largeur de la plaque 13 tandis que l'orifice 14 est situé au milieu de la chambre 16, c'est-à-dire pratiquement dans le plan de symétrie de la face 11 de l'arbre 8 située en regard de la plaque 13.

Au contraire, les plaques 19 et 20, situées en regard des deux autres faces de l'arbre 8, comportent à leur extrémité deux chambres de répartition : c'est le cas des chambres 22 et 24 à l'extrémité de la plaque 19 qui est située en regard de la face 12 de l'arbre 8. On remarque encore sur la figure 2 que les chambres de répartition 22 et 24 sont situées de part et d'autre du plan de symétrie P de la face 12, ce plan étant perpendiculaire à la face 12 et passant par l'axe de l'arbre 8.

La constitution des plaques 19 et 13 ainsi que le rôle des chambres de répartition 22 et 24 vont maintenant être décrits plus en détail en référence à la figure 3. Sur cette figure, on voit que la plaque 13 comporte à chacune de ses extrémités une seule chambre de répartition telle que 16 ou 17. Au centre de la chambre de répartition 17 débouche une arrivée 26 de fluide munie d'une vis de réglage de pression 28. Un orifice 30, situé à l'intérieur de la chambre de répartition 17, permet le branchement d'une prise de pression afin de contrôler la pression du fluide introduit par l'orifice d'arrivée 26. On voit également, dans la partie centrale de la plaque 13, trois orifices 31 permettant l'évacuation du fluide servant à maintenir l'arbre à l'intérieur du palier et qui est introduit par les orifices tels que 26.

Sur la figure, on voit également, disposée perpendiculairement à la plaque 13, la plaque 19 qui comporte, à l'une de ses extrémités les deux chambres de répartition 22 et 24 dont il a été fait mention plus haut en référence à la figure 2 et à l'autre extrémité deux autres chambres référencées 32 et 34. L'arrachement partiel de la figure 3 montre l'arrivée 36 de fluide dans la chambre 34, cette arrivée étant munie d'une vis de réglage de pression 38. La chambre 34 comporte également, comme toutes les autres chambres de répartition du dispositif, un orifice 40 de prise de pression. La partie centrale de la plaque 19 est percée de trois orifices 41 pour l'évacuation du fluide.

Chaque chambre de répartition comporte une arrivée de fluide avec une vis de réglage individuelle et une prise de pression individuelle, ce qui permet de régler la pression du fluide au départ afin de régler de manière précise le positionnement de l'arbre dans son palier.

Le fonctionnement de l'appareil est le suivant : l'interposition d'un film fluide sous pression entre l'arbre et les plaques telles que 13 et 19 permet, de manière connue, de maintenir celui-ci à l'intérieur du palier et d'en assurer le guidage sans frottement avec les parois du palier. Si la position angulaire de l'arbre par rapport au palier varie accidentellement, par exemple si l'arbre 8 subit une légère rotation dans le sens de la flèche $F_1$ de la figure 3, de telle sorte qu'une partie de la face 12 de l'arbre se rapproche de la chambre de répartition 22 et que l'autre partie s'éloigne de la chambre de répartition 24, on a une augmentation de pression au voisinage de la chambre 22 et une diminution de pression au voisinage de la chambre 24. Le même phénomène se produit au niveau de la plaque (non représentée sur la figure), qui est située en regard de la plaque 19 et lui est identique. Un couple est donc créé qui s'exerce sur la face 12 et la face opposée de l'arbre et ramène celui-ci dans sa position initiale (rotation dans le sens de la flèche $F_2$). Le dispositif permet donc, une fois que toutes les pressions d'arrivée sont réglées, de maintenir l'arbre automatiquement dans la position voulue. Avant la mise en service, on règle la pression à la valeur désirée dans chaque chambre de répartition à l'aide des vis de réglage telles que 38 et des orifices de prise de pression tels que 40. Ceci permet, au départ, de placer l'arbre exactement dans la bonne position par rapport au palier. Ensuite, pendant la phase de fonctionnement, la pression restant constante dans chaque chambre de répartition, cette position est maintenue constante automatiquement par le mécanisme décrit ci-dessus.

Le mode de réalisation qui vient d'être décrit s'applique à un arbre à section carrée, mais il est bien entendu qu'un tel palier peut être utilisé pour le guidage de n'importe quel arbre de section polygonale ou d'un arbre de section quelconque, pourvu qu'il présente au moins une face plane parallèle à ses génératrices. Par exemple dans le cas d'un arbre à section rectangulaire, les chambres de répartition telles que 22 et 24 seront placées en regard de la face de l'arbre correspondant à la longueur du rectangle. Dans le cas d'un arbre à section hexagonale, on pourra disposer alternativement le long des faces de l'arbre une plaque avec deux chambres de répartition telle que la plaque 19 et une plaque avec une seule chambre de répartition telle que la plaque 13. Le nombre et la disposition des chambres de répartition sur les plaques du dispositif peut être quelconque pourvu que l'une au moins des plaques présente en regard d'une face plane de l'arbre deux chambres de répartition situées de part et d'autre du plan de symétrie de cette face.

Ainsi, le dispositif selon l'invention présente des avantages particulièrement intéressants puisqu'il permet non seulement de faire varier facilement et rapidement la position angulaire de l'arbre par l'intermédiaire du palier et des moyens de rotation qui lui sont associés, mais aussi de maintenir l'arbre automatiquement et constamment dans la position voulue par rapport au palier pendant toute la durée des opérations. Cette possibilité n'existait pas avec les dispositifs de l'art antérieur dans lesquels le guidage de l'arbre était assuré par des rails ou des barres cylindriques parallèles à l'arbre : la position angulaire de celui-ci était imposée une fois pour toutes et les installations étaient plus complexes et plus encombrantes (donc plus coûteuses) à cause de la présence des barres de guidage et des dispositifs de liaison entre l'arbre et celles-ci. A titre d'essai, on a réalisé un palier conforme à l'invention pour guider un arbre à section carrée de 40 mm de côté avec des plaques ayant une longueur totale de 240 mm : il a été possible d'atteindre des vitesses de l'ordre de 4 à 5 m/s sans vibrations, le fluide utilisé étant de l'eau sous pression.

Il est bien entendu que l'invention ne se limite pas aux seuls exemples qui viennent d'être décrits mais qu'on peut envisager des variantes sans sortir pour autant du cadre de l'invention. C'est ainsi que l'homme de l'art pourra choisir au mieux le nombre et l'emplacement des chambres de répartition et des orifices d'évacuation du fluide dans les plaques ainsi que la forme de celles-ci en fonction de chaque cas particulier. L'invention s'applique à tous les cas où l'on désire obtenir un déplacement rectiligne avec une résistance minimale au glissement, le mouvement étant contrôlé angulairement. Le dispositif peut être utilisé dans l'air ou immergé dans un liquide de même nature que celui alimentant les paliers de guidage.

## Revendications

1. Dispositif de manutention d'une charge à l'aide d'un arbre (8), ce dispositif comportant des moyens de translation de l'arbre (8) le long de son axe et des moyens de rotation (18) de l'arbre (8) autour de son axe, caractérisé en ce que l'arbre (8) a une section polygonale et est entouré d'un palier fluide (10) assurant son guidage, en ce que les moyens de rotation (18) sont en prise avec le palier fluide (10), en ce que l'arbre (8) présente au moins deux faces planes parallèles et en ce que ledit palier (10) comporte, en regard de chacune des deux faces planes précitées, deux chambres de répartition (32, 34) dans chacune desquelles débouche une arrivée (36) de fluide sous pression, chacune des arrivées (36) de fluide sous pression étant munie d'un réglage individuel de pression (38).

2. Dispositif selon la revendication 1, caractérisé en ce que le palier (10) comporte, en regard d'au moins une face plane de l'arbre (8), un premier et un deuxième groupes de deux chambres de répartition (22, 24 ; 32, 34) dans chacune desquelles débouche une arrivée (36) de fluide sous pression, chacune des arrivées (36) de fluide sous pression étant munie d'un réglage individuel de pression (38), le premier groupe comprenant les deux chambres (22 et 24) étant espacé du deuxième groupe comprenant les deux chambres (32 et 34) le long de l'axe de l'arbre (8) et les deux groupes étant liés mécaniquement l'un à l'autre.

3. Dispositif de manutention d'une charge immergée dans un milieu liquide caractérisé en ce que ce dispositif est conforme à l'une quelconque des revendications 1 et 2 et en ce que ce milieu liquide est utilisé comme fluide d'alimentation dudit palier (10).

4. Appareil de contrôle d'un objet (5) comportant des moyens de contrôle (4) et un dispositif de manutention pour amener ledit objet (5) devant les moyens de contrôle (4), caractérisé en ce que le dispositif de manutention est conforme à l'une quelconque des revendications 1 et 2.

## Claims

1. Apparatus for handling a load by means of a shaft (8), said apparatus comprising means for translation of the shaft (8) lengthways of its axis, and means (18) for rotating the shaft (8) around its axis, characterized in that the shaft (8) has a polygonal section and is surrounded by a fluid bearing (10) for its guidance, and in that the rotation means (18) are aligned with the fluid bearing (10), and in that the shaft (8) has at least two flat parallel faces, and in that said bearing (10) comprises, facing each of said two flat faces, two distribution chambers (32, 34) into each of which opens a pressurized fluid inlet (36), each of the pressurized fluid inlets (36) having its own individual pressure control (38).

2. Apparatus according to Claim 1, characterized in that the bearing (10) comprises, facing at least one flat face of the shaft (8), first and second groups, each of two distribution chambers (22, 24 ; 32, 34) into each of which opens a pressurized fluid inlet (36), each of the pressurized fluid inlets (36) having its own individual pressure control (38), the first group comprising two chambers (22 and 24) being spaced from the second group comprising two chambers (32 and 34) longitudinally of the axis of the shaft (8), and the two groups being mechanically interconnected.

3. Apparatus for handling a load submerged in a liquid medium, characterized in that said apparatus is according to either one of Claims 1 and 2, and in that said liquid medium is employed as the supply fluid for said bearing (10).

4. Apparatus for controlling an object (5) comprising control means (4) and a handling apparatus for moving said object (5) before said control means (4), characterized in that the handling apparatus is according to either one of Claims 1 and 2.

## Patentansprüche

1. Vorrichtung zur Handhabung einer Last mittels einer Welle (8) wobei die Vorrichtung Mittel zum Verschieben der Welle (8) längs ihrer Achse und Mittel zum Drehen (18) der Welle (8) um ihre Achse umfaßt, dadurch gekennzeichnet, daß die Welle (8) einen polygonalen Querschnitt aufweist und von einem ihre Führung sicherstellenden Fluidlager (10) umgeben ist, daß die Drehmittel (18) mit dem Fluidlager (10) in Eingriff sind, daß die Welle (8) wenigstens zwei parallele, ebene Seiten aufweist und daß das Lager (10) jeder der zwei vorgenannten, ebenen Seiten gegenüberliegend zwei Verteilungskammern (32, 34) aufweist, in die jeweils ein Einlaß (36) für ein Druckfluid mündet, wobei jeder der Einlässe (36) für das Druckfluid mit einer eingenen Druckregulierung (38) versehen ist.

2. Vorrichtung nach Anspruch 1, dadurch gekennzeichnet, daß das Lager (10) wenigstens einer ebenen Seite der Welle (8) gegenüberliegend eine erste und eine zweite Gruppe von zwei Verteilungskammern (22, 24 ; 32, 34) aufweist, wobei in jede von ihnen ein Einlaß (36) für das Druckfluid mündet, daß jeder der Einlässe (36) für das Druckfluid mit einer eingenen Druckregulierung (38) versehen ist, und daß die erste, die zwei Kammern (22 und 24) umfassende Gruppe von der zweiten, die zwei Kammern (32 und 34) umfassenden Gruppe längs der Achse der Welle (8) beabstandet ist und daß die zwei Gruppen mechanisch miteinander verbunden sind.

3. Vorrichtung zur Handhabung einer in einer Flüssigkeit eingetauchten Last, dadurch gekennzeichnet, daß die Vorrichtung mit einer solchen gemäß Anspruch 1 oder 2 übereinstimmt und daß die Flüssigkeit als Versorgungsfluid für das Lager (10) verwendet wird.

4. Vorrichtung zur Steuerung eines Gegenstandes (5) mit Steuermitteln (4) und einer Handhabungsvorrichtung, um den Gegenstand (5) vor die Steuermittel (4) zu bringen, dadurch gekennzeichnet, daß die Handhabungsvorrichtung mit einer solchen gemäß Anspruch 1 oder 2 übereinstimmt.

FIG.1

# FIG. 2

# FIG. 3